# EUROPEAN PATENT SPECIFICATION

(11) **EP 4 503 251 B1**
(45) Date of publication and mention of the grant of the patent: **27.05.2026**
(21) Application number: 23812174.3
(22) Date of filing: 25.05.2023
(51) Int. Cl.: H01M 10/052, H01M 10/42, H01M 10/44, H01M 10/48, H02J 7/00, B60L 58/10

(54) **BATTERY PACK WITH IMPROVED FAST CHARGING FUNCTION**
AKKUPACK MIT VERBESSERTER SCHNELLLADEFUNKTION
BLOC-BATTERIE AVEC FONCTION DE CHARGE RAPIDE AMÉLIORÉE

(30) Priority: 27.05.2022 KR 20220065676
(43) Date of publication of application: 05.02.2025
(73) Proprietor: LG Energy Solution, Ltd., Seoul 07335 (KR)
(72) Inventor: PARK, Hyun-Woo, Daejeon 34122 (KR); KWON, Yo-Han, Daejeon 34122 (KR); KIM, Eun-Bee, Daejeon 34122 (KR); PARK, Seung-Won, Daejeon 34122 (KR); LEE, Dong-Jun, Daejeon 34122 (KR)
(74) Representative: Plasseraud IP
(86) International application number: PCT/KR2023/007190
(87) International publication number: WO 2023/229400

(56) References cited:
- EP-A1- 3 556 596
- EP-A1- 3 664 251
- JP-A- H0 898 414
- KR-A- 20120 003 454
- KR-A- 20170 051 060
- KR-A- 20170 051 060
- KR-A- 20180 059 795
- KR-A- 20190 051 341

## Description

### TECHNICAL FIELD

The present application claims priority to Korean Patent Application No. 10-2022-0065676 filed on May 27, 2022 in the Republic of Korea.

The present disclosure relates to a battery pack, and more specifically, to a battery pack with improved fast charging function.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

Recently, as the number of users of electric vehicles increases, the demand for fast charging for batteries included in electric vehicles is increasing. For example, to achieve fast charging within 15 minutes, a current of 4C (C-rate) or more must be applied. However, since batteries for electric vehicles in mass production are graphite-based batteries, there is a problem that lithium plating may occur when a high current of 4C (C-rate) or more is applied.

Here, lithium plating (Li-plating) is a phenomenon in which lithium metal is deposited on the surface of the negative electrode. Lithium plating causes side reactions with electrolyte and/or changes in the kinetic balance of the battery, causing battery degradation. In addition, as lithium metal is deposited on the surface of the negative electrode, an internal short circuit of the battery may occur, and there is a risk of ignition or explosion due to an internal short circuit.

Therefore, it is necessary to develop a battery pack that prevents lithium plating and allows fast charging.

EP3664251 relates to a power supply system comprising two batteries, which are connected either in parallel or in series depending on whether an external quick charger or an external super-quick charger is connected to them.

### DISCLOSURE

### Technical Problem

The present disclosure is designed to solve the problems of the related art, and therefore the present disclosure is directed to providing a battery pack with improved fast charging function.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A technical solution the above problem is provided in independent claim 1. In more detail a battery pack according to one aspect of the present disclosure comprises a first battery and a second battery; a connector unit having an electrode terminal and a communication terminal and configured to be connected to an external device; and a BMS configured to determine whether the connector unit and the external device are connected and control the electrical connection relationship between the first battery, the second battery and the external device according to the external device connected to the connector unit.

When a charger is connected to the connector unit as the external device, the BMS may be configured to receive information about a charging type from the charger and connect at least one of the first battery and the second battery to the charger according to the charging type.

The BMS may be configured to connect the first battery and the second battery to the charger when the charging type is slow charging.

The BMS may be configured to connect the second battery to the charger and block the connection between the first battery and the charger when the charging type is fast charging.

The BMS may be configured to change the charging type to slow charging after fast charging of the second battery ends and connect the first battery and the charger.

When a load is connected to the connector unit as the external device, the BMS may be configured to connect the first battery and the load and block the connection between the second battery and the load.

The BMS may be configured to measure a voltage of the first battery connected to the load and control the connection between the first battery, the second battery and the load based on the voltage of the first battery.

The BMS may be configured to connect the second battery and the load and block the connection between the first battery and the load when the voltage of the first battery is less than a preset threshold voltage.

The BMS may be configured to measure a voltage of the second battery and, when the voltages of the first battery and the second battery are the same, connect the first battery to the load again.

A battery pack according to another aspect of the present disclosure may further comprise a first relay connected between the first battery and the electrode terminal and configured to electrically connect or disconnect the first battery and the electrode terminal depending on a controlled operation state; and a second relay connected between the second battery and the electrode terminal and configured to electrically connect or disconnect the second battery and the electrode terminal depending on the controlled operation state.

The BMS may be configured to control the connection relationship between the first battery, the second battery and the external device by controlling the operation states of the first relay and the second relay.

The first battery and the second battery are configured to have different negative electrode active materials.

A vehicle battery pack according to still another aspect of the present disclosure may comprise the battery pack according to an aspect of the present disclosure.

### Advantageous Effects

According to one aspect of the present disclosure, there is an advantage in providing a battery pack that prevents lithium plating and enables fast charging.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a battery pack according to an embodiment of the present disclosure.
FIG. 2 is a diagram schematically showing an exemplary configuration of a battery pack according to an embodiment of the present disclosure.
FIG. 3 is a diagram schematically showing the charging process of the battery pack according to an embodiment of the present disclosure.
FIGS. 4 and 5 are diagrams schematically showing an embodiment in which the battery pack according to an embodiment of the present disclosure is slowly charged.
FIGS. 6 to 8 are diagrams schematically showing an embodiment in which the battery pack according to an embodiment of the present disclosure is fast charged.
FIGS. 9 to 11 are diagrams schematically showing an embodiment in which the battery pack according to an embodiment of the present disclosure is discharged.
FIGS. 12 and 13 are diagrams schematically showing another embodiment in which the battery pack according to an embodiment of the present disclosure is discharged.
FIG. 14 is a diagram schematically showing the appearance of a vehicle according to another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, a preferred embodiment of the present disclosure will be described in detail with reference to the accompanying drawings.

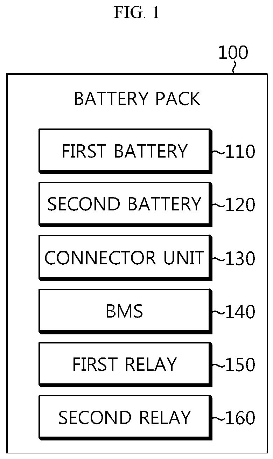

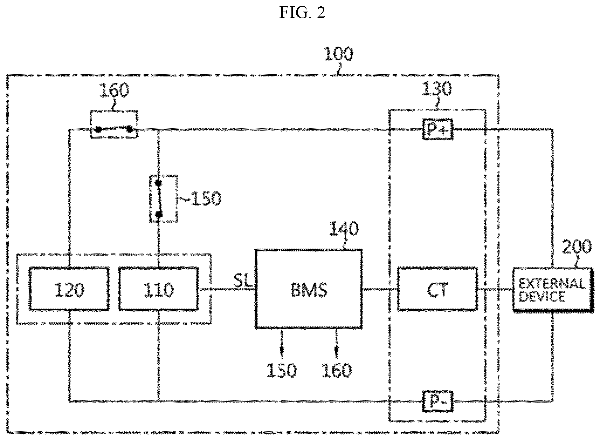

FIG. 1 is a diagram schematically showing a battery pack 100 according to an embodiment of the present disclosure. FIG. 2 is a diagram schematically showing an exemplary configuration of a battery pack 100 according to an embodiment of the present disclosure.

Referring to FIG. 1, the battery pack 100 may include a first battery 110, a second battery 120, a connector unit 130, and a BMS (Battery management system) 140.

Here, the battery refers to one physically separable independent cell having a negative electrode terminal and a positive electrode terminal. For example, a lithium-ion cell or a lithium polymer cell may be regarded as the battery. In addition, the battery may refer to a battery module in which a plurality of cells are connected in series and/or in parallel.

In the embodiment of FIG. 2, the battery pack 100 may include a first battery 110 and a second battery 120. The positive electrode terminal of the first battery 110 and the positive electrode terminal of the second battery 120 may be connected to the positive electrode terminal P+ of the battery pack 100. Also, the negative electrode terminal of the first battery 110 and the negative electrode terminal of the second battery 120 may be connected to the negative electrode terminal P- of the battery pack 100.

The connector unit 130 includes electrode terminals P+, P- and a communication terminal CT, and may be configured to be connected to an external device 200.

For example, the electrode terminal may include a positive electrode terminal P+ and a negative electrode terminal P- of the battery pack 100. The electrode terminal can be connected to the external device 200 to form a power line. Also, the communication terminal CT can configure a communication line with the external device 200 connected to the battery pack 100.

In the embodiment of FIG. 2, the battery pack 100 may be connected to the external device 200. In this case, the electrode terminal may be connected to an external electrode terminal provided in the external device 200. Additionally, the communication terminal may be connected to an external communication terminal provided in the external device 200.

The BMS 140 may be configured to determine whether the connector unit 130 and the external device 200 are connected.

For example, the BMS 140 may be connected to the communication terminal CT of the connector unit 130. Additionally, the BMS 140 can communicate with the external device 200 through a communication line formed by the connection between the communication terminal CT of the connector unit 130 and the external communication terminal of the external device 200. That is, the BMS 140 can determine whether the connector unit 130 and the external device 200 are connected by communicating with the external device 200 through a communication line.

As another example, based on a change in at least one of the voltage, current, and resistance of the power line formed by the connection between the electrode terminal of the connector unit 130 and the external electrode terminal of the external device 200, the BMS 140 can determine whether the connector unit 130 and the external device 200 are connected.

Preferably, the BMS 140 can determine not only whether the connector unit 130 and the external device 200 are connected, but also the type of the external device 200 connected to the connector unit 130. For example, the BMS 140 may determine the external device 200 connected to the connector unit 130 as a charger 210 or a load 220. Here, the charger 210 is a device that can charge the battery pack 100 by applying a charging current to the battery pack 100. Also, the load 220 is a device that can discharge the battery pack 100 by receiving a discharge current from the battery pack 100.

The BMS 140 is configured to control the electrical connection relationship between the first battery 110, the second battery 120 and the external device 200 according to the external device 200 connected to the connector unit 130.

When the external device 200 is connected to the connector unit 130, the BMS 140 controls the electrical connection relationship between the first battery 110, the second battery 120 and the external device 200 based on the type of the external device 200.

For example, the BMS 140 can connect the first battery 110 and the external device 200 and block the connection between the second battery 120 and external device 200. In the embodiment of FIG. 2, the BMS 140 may control the operation state of the first relay 150 to a turn-on state and the operation state of the second relay 160 to a turn-off state.

As another example, the BMS 140 can connect the second battery 120 and the external device 200 and block the connection between the first battery 110 and the external device 200. In the embodiment of FIG. 2, the BMS 140 may control the operation state of the first relay 150 to the turn-off state and the operation state of the second relay 160 to the turn-on state.

In other words, the BMS 140 has an advantage of selectively configuring the electrical connection relationship between the batteries 110, 120 provided in the battery pack 100 and the external device 200 based on whether the external device 200 and the battery pack 100 are connected.

Referring further to FIG. 1, the battery pack 100 may further include a first relay 150 and a second relay 160.

The first relay 150 is connected between the first battery 110 and the electrode terminal, and may be configured to electrically connect or disconnect the first battery 110 and the electrode terminal depending on the controlled operation state.

In the embodiment of FIG. 2, when the operation state of the first relay 150 is the turn-on state, the first battery 110 and the external device 200 may be electrically connected. Conversely, if the operation state of the first relay 150 is the turn-off state, the electrical connection between the first battery 110 and the external device 200 may be blocked.

The second relay 160 is connected between the second battery 120 and the electrode terminal, and may be configured to electrically connect or disconnect the second battery 120 and the electrode terminal depending on the controlled operation state.

In the embodiment of FIG. 2, when the operation state of the second relay 160 is the turn-on state, the second battery 120 and the external device 200 may be electrically connected. Conversely, if the operation state of the second relay 160 is the turn-off state, the electrical connection between the second battery 120 and the external device 200 may be blocked.

Additionally, the BMS 140 may be configured to control the connection relationship between the first battery 110, the second battery 120 and the external device 200 by controlling the operation state of the first relay 150 and the second relay 160.

Specifically, the BMS 140 can control the operation state of the first relay 150 and the second relay 160 by considering the type of the external device 200 (e.g., the charger 210 or the load 220) and the voltage of the first battery 110.

The first battery 110 and the second battery 120 have different negative electrode active materials.

The first battery 110 is a graphite-based battery, and the second battery 120 is a silicon (Si)-based battery.

For example, the negative electrode active material of the first battery 110 may be 100% graphite, a mixture of graphite and silicon compounds (e.g., SiO and/or SiC), or a mixture of graphite and silicon.

For example, the negative electrode active material of the second battery 120 may be 100% silicon, a mixture of silicon and a silicon compounds (e.g., SiO and/or SiC), or a mixture of silicon and graphite.

Here, when the negative electrode active materials of the first battery 110 and the second battery 120 are both a mixture of graphite and silicon, the specific gravities of graphite in the negative electrode active material of the first battery 110 and the negative electrode active material of the second battery 120 may be significantly different. In other words, the negative electrode active material of the first battery 110 may be a mixture of a large amount of graphite and a small amount of silicon. Conversely, the negative electrode active material of the second battery 120 may be a mixture of a large amount of silicon and a small amount of graphite.

In general, when a charging current of 4C or more for fast charging is applied to a graphite-based battery, there is a problem that the possibility of lithium plating significantly increases. On the other hand, the silicon-based battery has an advantage that the possibility of lithium plating is significantly lower than the graphite-based battery even when a charging current of 4C or more for fast charging is applied. This is because the silicon-based battery has high energy density and is non-directional, so even when fast charging is performed, the possibility of lithium plating is significantly lower than that of the graphite-based battery.

On the other hand, because the lifespan characteristics of graphite-based batteries are much better than those of silicon-based batteries, silicon-based batteries are not used alone. For example, when both a graphite-based battery and a silicon-based battery charge and discharge at a slow rate, degradation of the graphite-based battery occurs more slowly than that of the silicon-based battery. This is because silicon-based batteries are more resistant to fast charging than graphite-based batteries, but their lifespan characteristics during charging and discharging are not good.

Therefore, the battery pack 100 according to an embodiment of the present disclosure has an advantage of improving fast charging performance and lifespan of the battery pack 100 by including the graphite-based first battery 110 and the silicon-based second battery 120.

Meanwhile, the BMS 140 may optionally include processors, application-specific integrated circuits (ASICs), other chipsets, logic circuits, registers, communication modems, data processing devices, etc. known in the art to execute various control logics performed in the present disclosure. Also, when the control logic is implemented as software, the BMS 140 may be implemented as a set of program modules. At this time, the program module may be stored in the memory and executed by the BMS 140. The memory may be inside or outside the BMS 140 and may be connected to the BMS 140 by various well-known means.

For example, the memory is not particularly limited in its kind as long as it is a known information storage means that can record, erase, update and read data. As an example, the information storage means may include RAM, flash memory, ROM, EEPROM, registers, and the like.

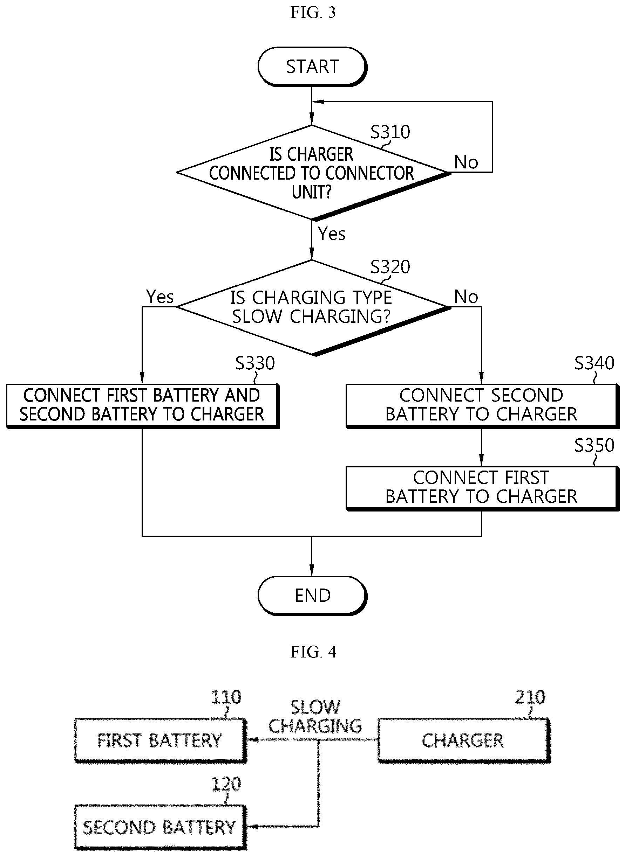

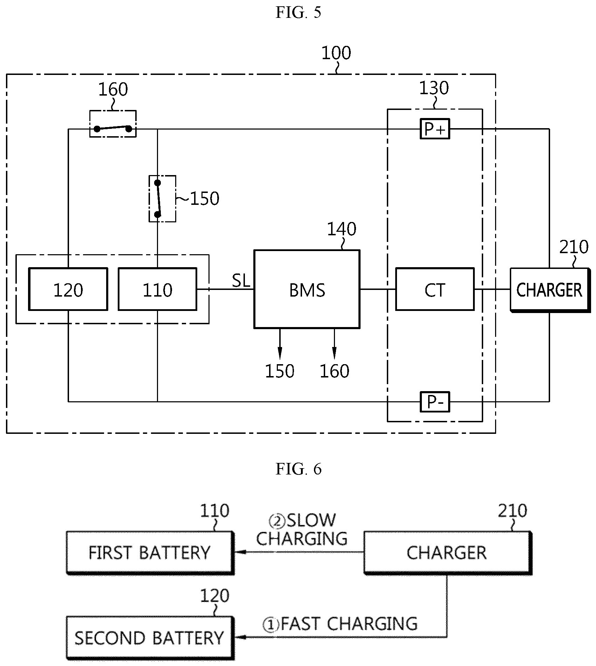

FIG. 3 is a diagram schematically showing the charging process of the battery pack 100 according to an embodiment of the present disclosure. FIGS. 4 and 5 are diagrams schematically showing an embodiment in which the battery pack 100 according to an embodiment of the present disclosure is slowly charged. FIGS. 6 to 8 are diagrams schematically showing an embodiment in which the battery pack 100 according to an embodiment of the present disclosure is fast charged.

Step S310 is a step of determining whether the connector unit 130 and the charger 210 are connected, and may be performed by the BMS 140. In step S310, if the charger 210 is connected to the connector unit 130, step S320 may be performed, and if the charger 210 is not connected to the connector unit 130, step S310 may be performed again.

The BMS 140 can determine whether the connector unit 130 and the charger 210 serving as the external device 200 are connected. Additionally, when the charger 210 is connected to the connector unit 130 as the external device 200, the BMS 140 may be configured to receive information about the charging type from the charger 210.

Here, the charging type may be slow charging or fast charging. Slow charging and fast charging can be distinguished according to the preset C-RATE. For example, for slow charging, the charging C-RATE may be set to target a charging time of about 4 to 5 hours, and for fast charging, the charging C-RATE may be set to target a charging time of about 15 to 30 minutes.

Specifically, when the charger 210 is connected to the connector unit 130, the BMS 140 and the charger 210 can communicate through the communication terminal CT of the connector unit 130. For example, the BMS 140 and the charger 210 can communicate using PLC (power line communication) technology. The BMS 140 can receive information about the charging type from the charger 210.

Step S320 is a step of determining the charging type of the charger 210 connected to the connector unit 130, and can be performed by the BMS 140. In step S320, step S330 may be performed if the charging type is slow charging, and step S340 may be performed if the charging type is fast charging.

Referring to steps S330 and S340, the BMS 140 may be configured to connect at least one of the first battery 110 and the second battery 120 to the charger 210 depending on the charging type.

Specifically, the BMS 140 can be configured to select the first and second batteries 110, 120 or the second battery 120 as the charging target battery depending on the charging type. Additionally, the BMS 140 can be configured to connect the charging target battery and the charger 210, and to block the connection between the remaining unselected batteries and the charger 210.

Step S330 is a step of connecting the first battery 110 and the second battery 120 to the charger 210 when the charging type is slow charging, and can be performed by the BMS 140.

Specifically, when the charging type is slow charging, the BMS 140 can be configured to connect both the first battery 110 and the second battery 120 to the charger 210. That is, if the charging type is slow charging, both the first battery 110 and the second battery 120 can be selected as the charging target battery.

For example, in the embodiment of FIG. 4, if the charging type of the charger 210 is slow charging, the charger 210 may be connected to the first battery 110 and the second battery 120.

For example, in the embodiment of FIG. 5, if the charging type of the charger 210 is slow charging, the BMS 140 can select the first battery 110 and the second battery 120 as charging target batteries. Additionally, the BMS 140 can control the operation state of the first relay 150 to the turn-on state in order to connect the first battery 110 to the charger 210. Additionally, the BMS 140 can control the operation state of the second relay 160 to the turn-on state in order to connect the second battery 120 and the charger 210.

In other words, if the charging type is slow charging, there is no risk of degradation of the first battery 110 and the second battery 120 due to charging, so BMS 140 can control the operation state of both the first relay 150 and the second relay 160 to the turn-on state. Accordingly, the first battery 110 and the second battery 120 can be charged together by the charger 210.

Step S340 is a step of connecting the second battery 120 and the charger 210 when the charging type is fast charging, and can be performed by the BMS 140. Also, the BMS 140 can block the connection between the first battery 110 and the charger 210.

Specifically, when the charging type is fast charging, the BMS 140 can be configured to connect the second battery 120 and the charger 210 and block the connection between the first battery 110 and the charger 210.

In the embodiment of FIG. 6, if the charging type of the charger 210 is fast charging, the charger 210 and the second battery 120 can be connected. Here, the connection between the first battery 110 and the charger 210 is blocked.

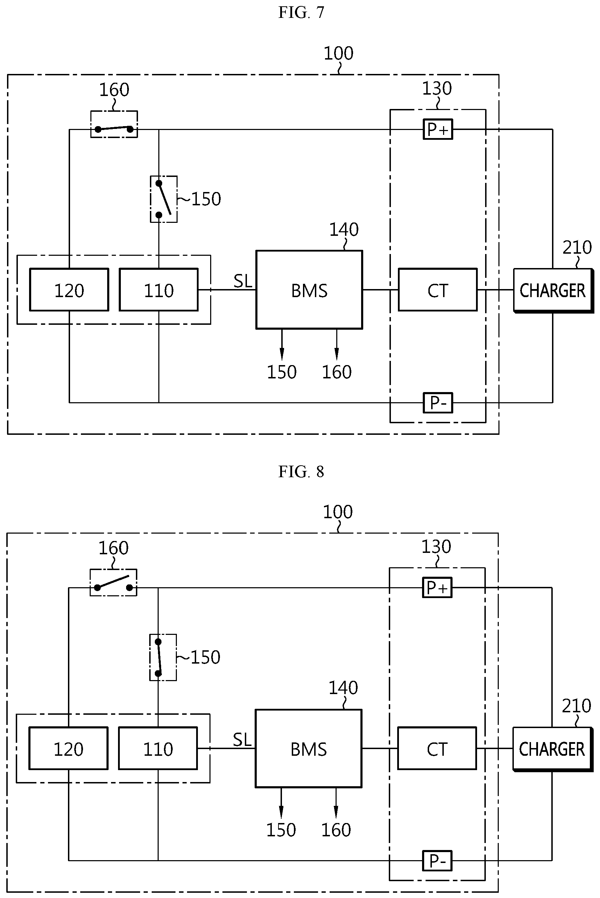

In the embodiment of FIG. 7, if the charging type of the charger 210 is fast charging, the BMS 140 can select the second battery 120 as the charging target battery. Additionally, the BMS 140 can control the operation state of the second relay 160 to the turn-on state in order to connect the second battery 120 to the charger 210. Additionally, the BMS 140 can control the operation state of the first relay 150 to the turn-off state to block the connection between the first battery 110 and the charger 210.

Step S350 is a step of connecting the first battery 110 and the charger 210, and can be performed by the BMS 140.

Specifically, the BMS 140 can be configured to change the charging type to slow charging after fast charging of the second battery 120 ends. For example, the BMS 140 can request a change in charging type to the charger 210 through the communication terminal CT.

Also, the BMS 140 can connect the first battery 110 and the charger 210. Here, preferably, the BMS 140 can block the connection between the second battery 120 and the charger 210.

For example, in the embodiment of FIG. 8, the second battery 120 for which fast charging has been completed may be disconnected from the charger 210, and the first battery 110 requiring slow charging may be connected to the charger 210. That is, the BMS 140 can control the operation state of the second relay 160 to the turn-off state and the operation state of the first relay 150 to the turn-on state.

Therefore, according to an embodiment of the present disclosure, the battery pack 100 may rapidly charge the second battery 120 that is resistant to fast charging (less likely to degrade due to fast charging), and slowly charge the first battery 110 that is vulnerable to fast charging (more likely to degrade due to fast charging). In other words, through relay control by the BMS 140 included in the battery pack 100, both the first battery 110 and the second battery 120, which have different characteristics, can be quickly charged. In addition, since degradation of the first battery 110 can be prevented during the charging process, there is an advantage in that the lifespan of the first battery 110 is increased as a result.

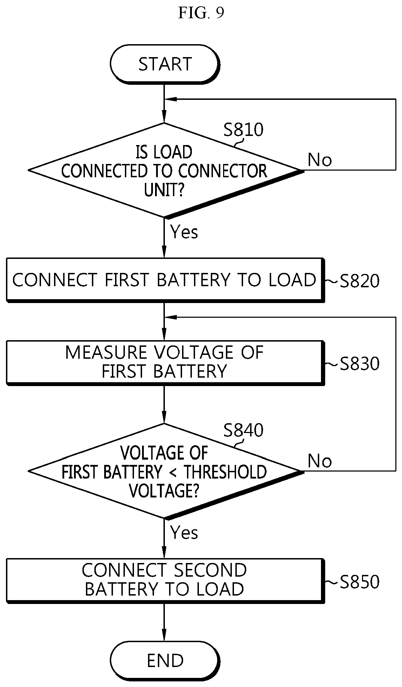

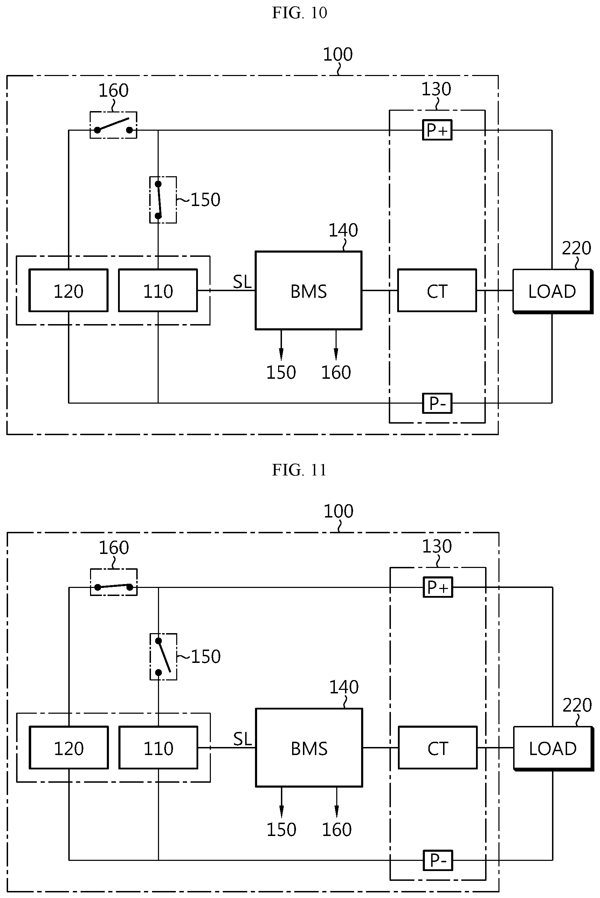

FIGS. 9 to 11 are diagrams schematically showing an embodiment in which the battery pack 100 according to an embodiment of the present disclosure is discharged. Specifically, FIG. 9 is a diagram schematically showing the discharging process of the battery pack 100. FIGS. 10 and 11 are diagrams schematically showing an exemplary configuration of the battery pack 100 during a discharging process.

Step S810 is a step of determining whether the connector unit 130 and the load 220 are connected, and may be performed by the BMS 140. In step S810, if the load 220 is connected to the connector unit 130, step S820 may be performed, and if the load 220 is not connected to the connector unit 130, step S810 may be performed again.

For example, in the embodiment of FIG. 10, the BMS 140 may be connected to the load 220 through the communication terminal CT. In addition, the BMS 140 can determine whether the connector unit 130 and the load 220 are connected by communicating with the load 220.

Step S820 is a step of connecting the first battery 110 and the load 220 when the load 220 is connected to the connector unit 130, and can be performed by the BMS 140.

Specifically, when the load 220 is connected to the connector unit 130 as the external device 200, the BMS 140 may be configured to connect the first battery 110 and the load 220 and block the connection between the second battery 120 and the load 220.

For example, in the embodiment of FIG. 10, the BMS 140 may control the operation state of the first relay 150 to the turn-on state in order to connect the first battery 110 to the load 220. Additionally, the BMS 140 can control the operation state of the second relay 160 to the turn-off state in order to block the connection between the second battery 120 and the load 220.

Step S830 is a step of measuring the voltage of the first battery 110, and can be performed by the BMS 140.

Specifically, the BMS 140 may be configured to measure the voltage of the first battery 110. Additionally, the BMS 140 may be configured to control the connection between the first battery 110, the second battery 120 and the load 220 based on the voltage of the first battery 110.

In the embodiment of FIG. 10, the BMS 140 can be connected to the first battery 110 and the second battery 120 through the sensing line SL. Additionally, the BMS 140 can measure the current, voltage, and temperature of the first battery 110 and the second battery 120 through the sensing line SL. In FIG. 10, the BMS 140 and the sensing line SL are briefly shown, but the measurement unit included in the BMS 140 (e.g., including a voltage sensor, a current sensor, and a temperature sensor) may measure is used to measure a current, voltage, and temperature of the first battery 110 and the second battery 120 through the sensing line SL.

Step S840 is a step of comparing the voltage of the first battery 110 and the threshold voltage, and may be performed by the BMS 140. In step S840, if the voltage of the first battery 110 is less than the threshold voltage, step S850 may be performed, and if the voltage of the first battery 110 is equal to or more than the threshold voltage, step S830 may be performed again.

Here, the threshold voltage may be preset to a voltage required to charge the first battery 110. In other words, the threshold voltage can be set in advance to a voltage at which it is considered that charging is required in order to prevent the first battery 110 from rapidly degrading. This threshold voltage is set to correspond to the type of the first battery 110 and can be set theoretically or experimentally.

Step S850 is a step of connecting the second battery 120 and the load 220, and can be performed by the BMS 140.

Specifically, the BMS 140 may be configured to connect the second battery 120 and the load 220 when the voltage of the first battery 110 is less than a preset threshold voltage. Preferably, the BMS 140 may be configured to block the connection between the first battery 110 and the load 220 to prevent the first battery 110 from being further discharged.

For example, in the embodiment of FIG. 11, the BMS 140 can connect the load 220 and the second battery 120 by controlling the operation state of the second relay 160 to the turn-on state. In addition, the BMS 140 can block the connection between the load 220 and the first battery 110 by controlling the operation state of the first relay 150 to the turn-off state. In this case, since the first battery 110 is no longer discharged, degradation of the first battery 110 can be prevented.

In other words, the battery pack 100 according to an embodiment of the present disclosure can prevent the first battery 110 from degrading due to discharge by controlling the electrical connection between the first battery 110, the second battery 120 and the load 220 according to the voltage of the first battery 110. Accordingly, the lifespan of the first battery 110 can be increased.

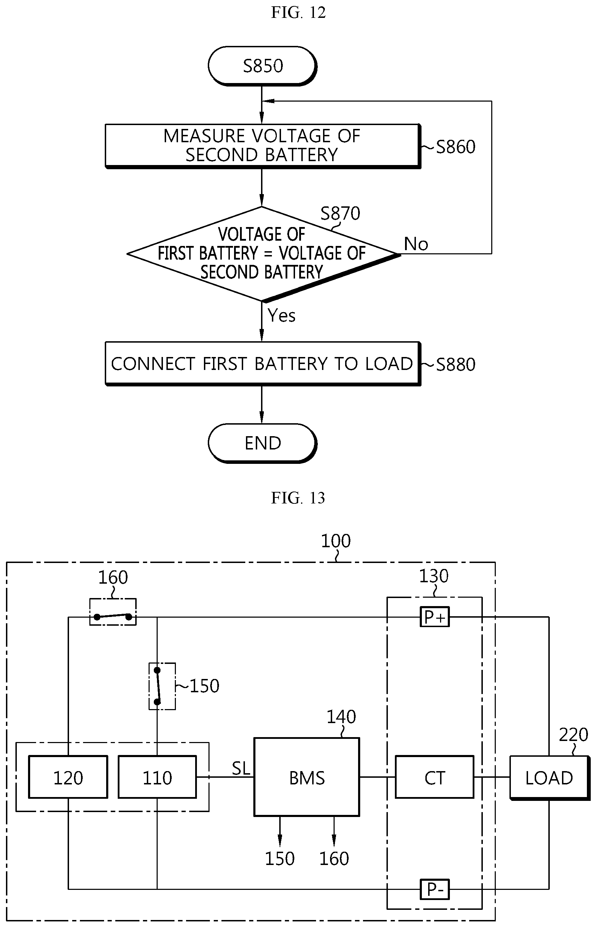

FIGS. 12 and 13 are diagrams schematically showing another embodiment in which the battery pack according to an embodiment of the present disclosure is discharged. Specifically, FIG. 12 is a diagram schematically showing the discharging process of the battery pack 100. FIG. 13 is a diagram schematically showing an exemplary configuration of the battery pack 100 during a discharge process. Here, steps S860 to S880 of FIG. 12 may be performed after step S850 of FIG. 9.

Step S860 may be performed after step S850 of FIG. 9. Step S860 is a step of measuring the voltage of the second battery 120, and can be performed by the BMS 140.

For example, in FIG. 13, the BMS 140 can measure the voltage, current, and temperature of the second battery 120 through the sensing line SL.

Step S870 is a step of comparing the voltage of the first battery 110 and the voltage of the second battery 120, and may be performed by the BMS 140. If the voltage of the first battery 110 and the voltage of the second battery 120 are the same in step S870, step S880 may be performed, otherwise, step S860 may be performed.

Step S880 is a step of connecting the first battery 110 and the load 220, and can be performed by the BMS 140.

Specifically, the BMS 140 may be configured to connect the first battery 110 to the load 220 again when the voltages of the first battery 110 and the second battery 120 are the same. That is, if both the voltage of the first battery 110 and the voltage of the second battery 120 correspond to the threshold voltage, both the first battery 110 and the second battery 120 can be connected to the load 220.

For example, in the embodiment of FIG. 13, the BMS 140 can connect the first battery 110 and the load 220 by controlling the operation state of the first relay 150 to the turn-on state. That is, since both the operation states of the first relay 150 and the second relay 160 are turn-on state, the first battery 110 and the second battery 120 can be connected to the load 220 in a parallel structure.

Even if the voltage of the first battery 110 and the voltage of the second battery 120 are different, if the BMS 140 controls the operation state of both the first relay 150 and the second relay 160 to the turn-on state, accidents such as heat generation, fire, or explosion may occur due to the difference in rated capacity of the first battery 110 and the second battery 120. Therefore, in order to prevent degradation of the first battery 110, the BMS 140 first blocks the connection between the first battery 110 and the load 220, and then when the voltage of the second battery 120 becomes the same as the voltage of the first battery 110, the BMS may connect the first battery 110 and the load 220 again. Because both the first battery 110 and the second battery 120 are connected to the load 220, power can be smoothly supplied to the load 220.

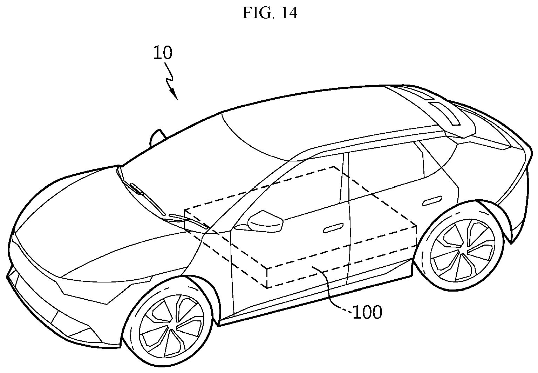

FIG. 14 is a diagram schematically showing the appearance of a vehicle according to another embodiment of the present disclosure.

Referring to FIG. 14, the battery pack 100 according to an embodiment of the present disclosure may be included in a vehicle 10 such as an electric vehicle (EV) or a hybrid vehicle (HV). In addition, the battery pack 100 may drive the vehicle 10 by supplying power to a motor through an inverter included in the vehicle 10.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Explanation of reference signs)

10: vehicle
100: battery pack
110: first battery
120: second battery
130: connector unit
140: BMS
150: first relay
160: second relay
200: external device
210: charger
220: load

## Claims

1. A battery pack (100), comprising:
a first battery (110) and a second battery (120); wherein the first battery (110) and the second battery (120) have different negative electrode active materials, wherein the first battery (110) is a graphite-based battery, and the second battery (120) is a silicon-based battery,
a connector unit (130) having an electrode terminal and a communication terminal and configured to be connected to an external device (200); and
a BMS (140) configured to determine whether the connector unit (130) and the external device (200) are connected and
when the external device (200) is connected to the connector unit (130), the BMS (140) is configured to control the electrical connection relationship between the first battery (110), the second battery (120) and the external device (200) based on the type of the external device (200).

2. The battery pack (100) according to claim 1,
wherein when a charger (210) is connected to the connector unit (130) as the external device (200), the BMS (140) is configured to receive information about a charging type from the charger (210) and connect at least one of the first battery (110) and the second battery (120) to the charger (210) according to the charging type.

3. The battery pack (100) according to claim 2,
wherein the BMS (140) is configured to connect the first battery (110) and the second battery (120) to the charger (210) when the charging type is slow charging.

4. The battery pack (100) according to claim 2,
wherein the BMS (140) is configured to connect the second battery (120) to the charger (210) and block the connection between the first battery (110) and the charger (210) when the charging type is fast charging.

5. The battery pack (100) according to claim 4,
wherein the BMS (140) is configured to change the charging type to slow charging after fast charging of the second battery (120) ends and connect the first battery (110) and the charger (210).

6. The battery pack (100) according to claim 1,
wherein when a load is connected to the connector unit as the external device, the BMS (140) is configured to connect the first battery (110) and the load (220) and block the connection between the second battery (120) and the load (220).

7. The battery pack (100) according to claim 6,
wherein the BMS (140) is configured to measure a voltage of the first battery (110) connected to the load (220) and control the connection between the first battery (110), the second battery (120) and the load (220) based on the voltage of the first battery (110).

8. The battery pack (100) according to claim 7,
wherein the BMS (140) is configured to connect the second battery (120) and the load (220) and block the connection between the first battery (110) and the load (220) when the voltage of the first battery (110) is less than a preset threshold voltage.

9. The battery pack (100) according to claim 8,
wherein the BMS (140) is configured to measure a voltage of the second battery (120) and, when the voltages of the first battery (110) and the second battery (120) are the same, connect the first battery (110) to the load (220) again.

10. The battery pack (100) according to claim 1, further comprising:
a first relay (150) connected between the first battery (110) and the electrode terminal and configured to electrically connect or disconnect the first battery (110) and the electrode terminal depending on a controlled operation state; and
a second relay (160) connected between the second battery (120) and the electrode terminal and configured to electrically connect or disconnect the second battery (120) and the electrode terminal depending on the controlled operation state.

11. The battery pack (100) according to claim 10,
wherein the BMS (140) is configured to control the connection relationship between the first battery (110), the second battery (120) and the external device (200) by controlling the operation states of the first relay (110) and the second relay (120).

12. A vehicle (10), comprising the battery pack (100) according to any one of claims 1 to 11.

## Patentansprüche

1. Batteriepack (100), umfassend:
eine erste Batterie (110) und eine zweite Batterie (120); wobei die erste Batterie (110) und die zweite Batterie (120) verschiedene negative Elektrodenaktivmaterialien aufweisen, wobei die erste Batterie (110) eine graphitbasierte Batterie ist und die zweite Batterie (120) eine siliziumbasierte Batterie ist,
eine Verbindungseinheit (130), welche einen Elektrodenanschluss und einen Kommunikationsanschluss aufweist und dazu eingerichtet ist, mit einer externen Vorrichtung (200) verbunden zu sein; und
ein BMS (140), welches dazu eingerichtet ist, zu bestimmen, ob die Verbindungseinheit (130) und die externe Vorrichtung (200) verbunden sind, und
wobei, wenn die externe Vorrichtung (200) mit der Verbindungseinheit (130) verbunden ist, das BMS (140) dazu eingerichtet ist, die elektrische Verbindungsbeziehung zwischen der ersten Batterie (110), der zweiten Batterie (120) und der externen Vorrichtung (200) auf Grundlage des Typs der externen Vorrichtung (200) zu steuern.

2. Batteriepack (100) nach Anspruch 1,
wobei, wenn eine Ladeeinrichtung (210) als die externe Vorrichtung (200) mit der Verbindungseinheit (130) verbunden ist, das BMS (140) dazu eingerichtet ist, Informationen über einen Ladetyp von der Ladeeinrichtung (210) zu empfangen und wenigstens eine aus der ersten Batterie (110) und der zweiten Batterie (120) gemäß dem Ladetyp mit der Ladeeinrichtung (210) zu verbinden.

3. Batteriepack (100) nach Anspruch 2,
wobei das BMS (140) dazu eingerichtet ist, die erste Batterie (110) und die zweite Batterie (120) mit der Ladeeinrichtung (210) zu verbinden, wenn der Ladetyp ein langsames Laden ist.

4. Batteriepack (100) nach Anspruch 2,
wobei das BMS (140) dazu eingerichtet ist, die zweite Batterie (120) mit der Ladeeinrichtung (210) zu verbinden und die Verbindung zwischen der ersten Batterie (110) und der Ladeeinrichtung (210) zu unterbrechen, wenn der Ladetyp ein schnelles Laden ist.

5. Batteriepack (100) nach Anspruch 4,
wobei das BMS (140) dazu eingerichtet ist, den Ladetyp auf ein langsames Laden zu ändern, nachdem ein schnelles Laden der zweiten Batterie (120) geendet hat, und die erste Batterie (110) und die Ladeeinrichtung (210) zu verbinden.

6. Batteriepack (100) nach Anspruch 1,
wobei, wenn eine Last als die externe Vorrichtung mit der Verbindungseinheit verbunden ist, das BMS (140) dazu eingerichtet ist, die erste Batterie (110) und die Last (220) zu verbinden und die Verbindung zwischen der zweiten Batterie (120) und der Last (220) zu unterbrechen.

7. Batteriepack (100) nach Anspruch 6,
wobei das BMS (140) dazu eingerichtet ist, eine Spannung der mit der Last (220) verbundenen ersten Batterie (110) zu messen und die Verbindung zwischen der ersten Batterie (110), der zweiten Batterie (120) und der Last (220) auf Grundlage der Spannung der ersten Batterie (110) zu steuern.

8. Batteriepack (100) nach Anspruch 7,
wobei das BMS (140) dazu eingerichtet ist, die zweite Batterie (120) und die Last (220) zu verbinden und die Verbindung zwischen der ersten Batterie (110) und der Last (220) zu unterbrechen, wenn die Spannung der ersten Batterie (110) niedriger als eine voreingestellte Schwellenspannung ist.

9. Batteriepack (100) nach Anspruch 8,
wobei das BMS (140) dazu eingerichtet ist, eine Spannung der zweiten Batterie (120) zu messen und, wenn die Spannungen der ersten Batterie (110) und der zweiten Batterie (120) gleich sind, die erste Batterie (110) erneut mit der Last (220) zu verbinden.

10. Batteriepack (100) nach Anspruch 1, ferner umfassend:
ein erstes Relais (150), welches zwischen die erste Batterie (110) und den Elektrodenanschluss geschaltet ist und dazu eingerichtet ist, die erste Batterie (110) und den Elektrodenanschluss abhängig von einem gesteuerten Betriebszustand elektrisch zu verbinden oder zu trennen; und
ein zweites Relais (160), welches zwischen die zweite Batterie (120) und den Elektrodenanschluss geschaltet ist und dazu eingerichtet ist, die zweite Batterie (120) und den Elektrodenanschluss abhängig von dem gesteuerten Betriebszustand elektrisch zu verbinden oder zu trennen.

11. Batteriepack (100) nach Anspruch 10,
wobei das BMS (140) dazu eingerichtet ist, die Verbindungsbeziehung zwischen der ersten Batterie (110), der zweiten Batterie (120) und der externen Vorrichtung (200) durch ein Steuern der Betriebszustände des ersten Relais (110) und des zweiten Relais (120) zu steuern.

12. Fahrzeug (10), umfassend den Batteriepack (100) nach einem der Ansprüche 1 bis 11.

## Revendications

1. Bloc-batterie (100), comprenant :
une première batterie (110) et une seconde batterie (120) ; dans lequel la première batterie (110) et la seconde batterie (120) présentent des matériaux actifs d'électrode négative différents, dans lequel la première batterie (110) est une batterie à base de graphite, et la seconde batterie (120) est une batterie à base de silicium,
une unité de connexion (130) présentant une borne d'électrode et une borne de communication et configurée pour être connectée à un dispositif externe (200) ; et
un BMS (140) configuré pour déterminer si l'unité de connexion (130) et le dispositif externe (200) sont connectés et
lorsque le dispositif externe (200) est connecté à l'unité de connexion (130), le BMS (140) est configuré pour réguler la relation de connexion électrique entre la première batterie (110), la seconde batterie (120) et le dispositif externe (200) sur la base du type du dispositif externe (200).

2. Bloc-batterie (100) selon la revendication 1,
dans lequel, lorsqu'un chargeur (210) est connecté à l'unité de connexion (130) en tant que dispositif externe (200), le BMS (140) est configuré pour recevoir des informations sur un type de charge du chargeur (210) et connecter au moins une parmi la première batterie (110) et la seconde batterie (120) au chargeur (210) selon le type de charge.

3. Bloc-batterie (100) selon la revendication 2,
dans lequel le BMS (140) est configuré pour connecter la première batterie (110) et la seconde batterie (120) au chargeur (210) lorsque le type de charge est une charge lente.

4. Bloc-batterie (100) selon la revendication 2,
dans lequel le BMS (140) est configuré pour connecter la seconde batterie (120) au chargeur (210) et bloquer la connexion entre la première batterie (110) et le chargeur (210) lorsque le type de charge est une charge rapide.

5. Bloc-batterie (100) selon la revendication 4,
dans lequel le BMS (140) est configuré pour changer le type de charge en charge lente après la fin de la charge rapide de la seconde batterie (120) et connecter la première batterie (110) et le chargeur (210).

6. Bloc-batterie (100) selon la revendication 1,
dans lequel, lorsqu'une charge est connectée à l'unité de connexion en tant que dispositif externe, le BMS (140) est configuré pour connecter la première batterie (110) et la charge (220) et bloquer la connexion entre la seconde batterie (120) et la charge (220).

7. Bloc-batterie (100) selon la revendication 6,
dans lequel le BMS (140) est configuré pour mesurer une tension de la première batterie (110) connectée à la charge (220) et réguler la connexion entre la première batterie (110), la seconde batterie (120) et la charge (220) sur la base de la tension de la première batterie (110).

8. Bloc-batterie (100) selon la revendication 7,
dans lequel le BMS (140) est configuré pour connecter la seconde batterie (120) et la charge (220) et bloquer la connexion entre la première batterie (110) et la charge (220) lorsque la tension de la première batterie (110) est inférieure à une tension seuil prédéfinie.

9. Bloc-batterie (100) selon la revendication 8,
dans lequel le BMS (140) est configuré pour mesurer une tension de la seconde batterie (120) et, lorsque les tensions de la première batterie (110) et de la seconde batterie (120) sont identiques, reconnecter la première batterie (110) à la charge (220).

10. Bloc-batterie (100) selon la revendication 1, comprenant en outre :
un premier relais (150) monté entre la première batterie (110) et la borne d'électrode et configuré pour connecter ou déconnecter électriquement la première batterie (110) et la borne d'électrode en fonction d'un état de fonctionnement régulé ; et
un second relais (160) monté entre la seconde batterie (120) et la borne d'électrode et configuré pour connecter ou déconnecter électriquement la seconde batterie (120) et la borne d'électrode en fonction de l'état de fonctionnement régulé.

11. Bloc-batterie (100) selon la revendication 10,
dans lequel le BMS (140) est configuré pour réguler la relation de connexion entre la première batterie (110), la seconde batterie (120) et le dispositif externe (200) en régulant les états de fonctionnement du premier relais (110) et du second relais (120).

12. Véhicule (10), comprenant le bloc-batterie (100) selon l'une quelconque des revendications 1 à 11.
